# EUROPÄISCHE PATENTSCHRIFT

(11) **EP 3 078 103 B1**
(45) Veröffentlichungstag und Bekanntmachung des Hinweises auf die Patenterteilung: **27.09.2023**
(21) Anmeldenummer: 14830947.9
(22) Anmeldetag: 04.12.2014
(51) Int. Cl.: H02K 15/02, B23K 26/08, B23K 26/38

(54) **VERFAHREN ZUR HERSTELLUNG VON LAMELLEN FÜR EIN LAMELLENPAKET, INSBESONDERE FÜR ELEKTRISCHE MASCHINEN UND GENERATOREN, VORRICHTUNG MIT WENIGSTENS EINER STANZPRESSE SOWIE NACH DEM VERFAHREN HERGESTELLTE LAMELLE UND LAMELLENPAKET**
METHOD FOR PRODUCING LAMINATES FOR A LAMINATED CORE, IN PARTICULAR FOR ELECTRICAL MACHINES AND GENERATORS, DEVICE HAVING AT LEAST ONE PUNCH PRESS, AND LAMINATES AND LAMINATED CORE PRODUCED ACCORDING TO THE METHOD
PROCÉDÉ DE FABRICATION DE TÔLES DESTINÉES À CONSTITUER UN NOYAU FEUILLETÉ, EN PARTICULIER POUR DES MOTEURS ET GÉNÉRATEURS ÉLECTRIQUES, DISPOSITIF COMPRENANT AU MOINS UNE PRESSE DE DÉCOUPAGE AINSI QUE TÔLE ET NOYAU FEUILLETÉ RÉALISÉS SELON LEDIT PROCÉDÉ

(30) Priorität: 06.12.2013 DE 102013020662
(43) Veröffentlichungstag der Anmeldung: 12.10.2016
(73) Patentinhaber: Kienle + Spiess GmbH, 74343 Sachsenheim (DE)
(72) Erfinder: BAUER, Steffen, 74374 Zaberfeld (DE); BÖKER, Björn, 73733 Esslingen (DE)
(74) Vertreter: Jackisch-Kohl, Anna-Katharina
(86) Internationale Anmeldenummer: PCT/EP2014/003253
(87) Internationale Veröffentlichungsnummer: WO 2015/082076

(56) Entgegenhaltungen:
- EP-A1- 1 683 601
- EP-A1- 2 279 808
- CN-A- 102 820 743
- DE-A1- 10 040 978
- DE-A1- 10 340 114
- DE-A1- 19 724 075
- DE-A1-102004 060 078
- DE-T2- 60 121 982
- US-A- 4 285 754

## Beschreibung

Die Erfindung betrifft ein Verfahren zur Herstellung von Lamellen und eines Lamellenpaketes für elektrische Maschinen und Generatoren nach dem Oberbegriff des Anspruches 1 und eine Vorrichtung mit wenigstens einer Stanzpresse nach dem Oberbegriff des Anspruches 7.

In elektrischen Maschinen werden häufig Blechpakete aus gestapelten Lamellen eingesetzt, die aus geschnittenen Elektroblechen hergestellt werden. Solche Lamellenpakete werden beispielsweise für Rotoren und/oder Statoren von Elektromotoren eingesetzt. Ein Metallband wird von einer Haspel abgewickelt und in eine Stanzpresse geführt. Sie weist wenigstens ein Stanzwerkzeug auf, mit dem die Konturen der Lamelle in einer oder mehreren Stationen und einer oder mehreren Spuren gestanzt werden. Die so erzeugten Lamellen können innerhalb und außerhalb des Stanzwerkzeuges zum Lamellenpaket gestapelt und innerhalb des Lamellenpaketes miteinander verbunden werden. Bei unterschiedlichen Konturen der Lamellen ist jeweils ein eigenes Stanzwerkzeug erforderlich. Solche Stanzwerkzeuge sind teuer und führen beim Austausch zum Stillstand der Stanzpresse.

Es ist auch bekannt, das Metallband in eine Laseranlage zu fördern und innerhalb einer Laserschneidmaschine die Konturen der Lamelle in einer oder mehreren Stationen zu schneiden. Die herausgeschnittenen Lamellen werden dann einzeln entnommen und außerhalb der Laseranlage zum Paket zusammengefügt. Eine solche Vorgehensweise ist ebenfalls aufwändig und kostenintensiv.

Die DE 10 2004 060 078 A1 zeigt einen Spulenträger, wobei aufeinander gestapelte, von Streifen mit durch Laserschneiden erzeugte Zähne kunststoffummantelt, bewickelt und in Ringform gebogen werden. Im Anschluss werden verbliebene Verbindungsstellen zum Metallband durch Stanzen entfernt.

Es ist weiter bekannt (US 4 285 754 A), aus einem Metallband mit einem Stanzwerkzeug Lamellen zu stanzen, wobei die gesamte Kontur der Lamellen mit Ausnahme von Verbindungsstellen zum Metallband durch Strahlschneiden erzeugt wird.

Es schließlich bekannt (DE 100 40 978 A1), aus einem Metallband Lamellen auszuschneiden und anschließend zueinander ausgerichtet zu stapeln und miteinander zu verschweißen, um beispielsweise ein Stator- oder ein Rotorblechpaket zu bilden.

Der Erfindung liegt die Aufgabe zugrunde, das gattungsgemäße Verfahren und die gattungsgemäße Vorrichtung so auszubilden, dass eine einfache Fertigung der Lamelle auch mit unterschiedlichen Konturen möglich ist.

Diese Aufgabe wird beim gattungsgemäßen Verfahren erfindungsgemäß mit den kennzeichnenden Merkmalen des Anspruches 1 und bei der gattungsgemäßen Vorrichtung erfindungsgemäß mit den kennzeichnenden Merkmalen des Anspruches 7 gelöst.

Beim erfindungsgemäßen Verfahren wird zunächst die Kontur der Lamelle zumindest teilweise durch Strahlschneiden im Metallband erzeugt. Dabei wird das Verfahren so durchgeführt, dass die Lamelle noch im Metallband gehalten ist, so dass sie nicht vom Metallband herabfällt. Mit dem Stanzwerkzeug wird die Lamelle aus dem Metallband gestanzt. Da die Kontur oder auch eine Teilkontur der Lamelle durch Strahlschneiden erzeugt wird, hat die Lamelle sehr saubere Schneidkanten, die eine Nachbearbeitung der Lamelle nicht erfordern. Selbstverständlich kann die Lamelle nach ihrem Ausstanzen noch an ihrer Schneidkante nachgearbeitet werden, falls dies im Hinblick auf sehr hohe Genauigkeitsanforderungen notwendig sein sollte. Da die Lamelle nach dem Strahlschneiden noch mit dem Metallband verbunden ist, wird sie unter das Stanzwerkzeug transportiert und erst dort aus dem Metallband gelöst. Dadurch lassen sich mit den Lamellen sehr einfach, kostensparend und in kurzer Zeit die Lamellenpakete bilden.

Die gesamte Kontur mit Ausnahme von Verbindungsstellen der Lamelle zum Metallband wird durch Strahlschneiden erzeugt.

Mit dem Stanzwerkzeug können weitere Konturen geschnitten und/oder die Lamelle mit den durch Strahlschneiden erzeugten Konturen aus dem Metallband ausgeschnitten werden.

Die Lamellen werden nach dem Ausschneiden aus dem Metallband zu einem Lamellenpaket gestapelt. Eine hierfür erforderliche Paketier-einheit zum Aufbringen oder Einbringen der Verbindungselemente befindet sich vorteilhaft zwischen der Strahlschneideinheit und der Stanzpresse.

Vorteilhaft werden die Lamellen in einer Spur des Metallbandes hergestellt. In diesem Falle wird als Metallband bevorzugt ein Schmalband eingesetzt. Unter Schmalband ist ein Metallband zu verstehen, das durch Längsteilen (Scherschneiden) aus einem Breitband hergestellt wird. Das Schmalband liegt vor der Verarbeitung im Stanzprozess als Coil vor. Die Breite des Schmalbandes orientiert sich an den Abmessungen des daraus herzustellenden Produktes.

Es ist aber auch möglich, die Lamellen in wenigstens zwei Spuren des Metallbandes herzustellen. Dann wird vorteilhaft ein Breitband als Metallband eingesetzt. Ein Breitband ist ein Metallband, dessen Breite sich aus dem Herstellverfahren ergibt. Im Anlieferzustand ist das Breitband zum Coil aufgewickelt. Die Ränder des Breitbandes können bereits vom Hersteller besäumt sein. Eine übliche, typische Breite eines Breitbandes für die Herstellung von Lamellen für elektrische Maschinen bzw. Generatoren beträgt etwa 1200 mm.

Die erfindungsgemäße Vorrichtung weist zusätzlich zur wenigstens einen Stanzpresse wenigstens eine vorgeschaltete Strahlschneideinheit auf. Sie hat wenigstens einen Strahlschneidkopf, mit dem die Kontur der Lamelle zuverlässig geschnitten werden kann. Mit dem Strahlschneidkopf lassen sich mit hoher Genauigkeit selbst komplizierteste Konturen einwandfrei aus dem Metallband schneiden. Zudem bietet die Verwendung des Strahlschneidkopfes den Vorteil, dass in einem Metallband unmittelbar hintereinander unterschiedlichste Konturen erzeugt werden können, da lediglich die Programmsteuerung für den Strahlschneidkopf umgeschaltet werden muss.

Die Stanzpresse ist mit wenigstens einer Stapelstation zum Stapeln der Lamellen versehen. Dann kann innerhalb der Stanzpresse mit dem Werkzeug die Lamelle aus dem Metallband in die Stapelstation ausgestoßen werden.

Damit eine einwandfreie Verarbeitung gewährleistet ist, ist der Strahlschneideinheit vorteilhaft ein Richtapparat vorgeschaltet.

Die Lamelle zeichnet sich dadurch aus, dass ihre Kontur durch Strahlschneiden hergestellt ist. Die Kontur weist darum keinen Stanzeinzug, keine Schnittflächen, keinen Bruch und auch keinen Grat auf, wie es bei der Herstellung der Lamellen mittels Stanzen regelmäßig der Fall ist.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in der Zeichnung dargestellten Ausführungsbeispieles näher erläutert. Es zeigen
- Fig. 1: in schematischer Darstellung eine erfindungsgemäße Vorrichtung zur Durchführung des erfindungsgemäßen Verfahrens,
- Fig. 2: eine Draufsicht auf ein die Vorrichtung gemäß Fig. 1 durchlaufendes Band,
- Fig. 3: eine Draufsicht auf eine Lamelle,
- Fig. 4: ein Lamellenpaket im Schnitt.

Die Vorrichtung hat eine Strahlschneideinheit 1 in Form einer Laserschneideinheit sowie eine nachfolgende Stanzpresse 2. Durch die Vorrichtung wird ein Metallband 3 transportiert, das ein Breit- oder ein Schmalband sein kann. Das Metallband 3 ist zu einem Coil 4 gewickelt, der auf einem Abwickler 5 drehbar gelagert ist. Das Metallband 3 wird optional durch einen Richtapparat 6 transportiert, in dem das Metallband 3 gerichtet wird. Anschließend wird das Metallband 3 mit Hilfe eines Vorschubapparates 7 der Strahlschneideinheit 1 zugeführt. Sie hat wenigstens einen Strahlschneidkopf 8, mit dem im Metallband 3 programmgesteuert definierte Konturen 9 geschnitten werden können. In der Paketiereinheit 12 werden optional die zur Bildung eines Lamellenpaketes 14 benötigten Verbindungselemente 16 auf das Metallband 3 aufgebracht bzw. in das Metallband 3 eingebracht. In der nachfolgenden Stanzpresse 2 wird mit einem Stanzwerkzeug 13 aus dem Metallband 3 die Lamelle 10 gestanzt, die die Kontur 9 enthält. Damit die Lamellen 10 bis zum Ausschneiden in der Stanzpresse 2 nicht aus dem Metallband 3 herausfallen, werden sie durch eine oder mehrere Verbindungsstellen 11 im Metallband 3 gehalten und positioniert.

Als Strahlquelle wird vorteilhaft ein CO₂-Laser verwendet, mit dem die jeweiligen Konturen 9 im Metallband 3 mit hoher Genauigkeit zuverlässig geschnitten werden können.

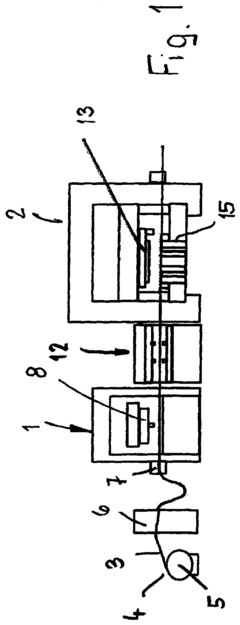

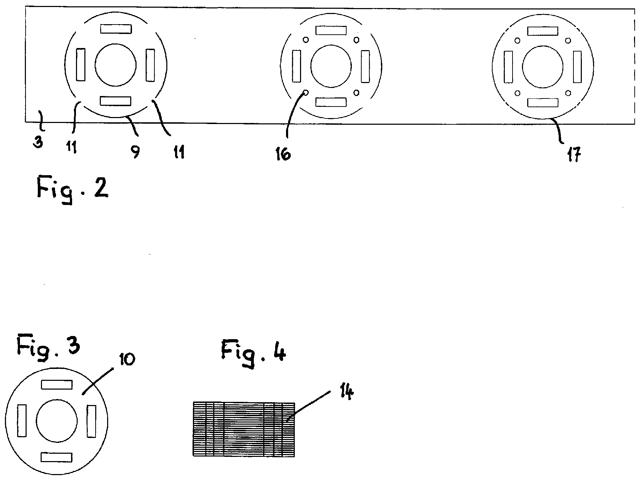

Das Metallband 3 wird, wie aus den Fig. 1 und 2 hervorgeht, in seiner Längsrichtung durch die Strahlschneideinheit 1 und die Stanzpresse 2 transportiert.

Mit der Strahlschneideinheit 1 werden die gewünschten Konturen 9 der auszustanzenden Lamellen 10 präzise hergestellt. Mit dem Strahlschneidkopf 8 lassen sich komplizierteste Konturen mit hoher Genauigkeit aus dem Metallband 3 schneiden. Dabei können die Konturen im Metallband 3 aufeinanderfolgend unterschiedlich gestaltet sein, weil der Strahlschneidkopf 8 programmgesteuert jede zur Erzeugung der unterschiedlichen Konturen erforderliche Bahn in der Strahlschneideinheit 1 abfahren kann. Im Unterschied zu Stanzwerkzeugen, bei denen für jede unterschiedliche Kontur ein unterschiedliches Werkzeug erforderlich ist, kann mit der Strahlschneideinheit 1 äußerst kostengünstig nacheinander jede geeignete Kontur in das Metallband 3 geschnitten werden.

Während der Konturerzeugung in der Strahlschneideinheit 1 steht das Metallband 3 still, so dass ein sauberer Schnitt erzeugt werden kann. Während der Strahlschneidkopf 8 programmgesteuert seine Bahnen während des Strahlschneidvorganges abfährt, wird zeitgleich eine Lamelle 10 mit einer zuvor in der Strahlschneideinheit 1 erzeugten Kontur 9 in der Stanzpresse 2 mittels eines Stanzwerkzeuges 13 aus dem Metallband 3 ausgestanzt.

Mit der Paketiereinheit 12 werden die zur Bildung eines Lamellenpaketes 14 benötigten Verbindungselemente 16 auf das Metallband 3 aufgebracht bzw. in das Metallband 3 eingebracht. Mit einem Stanzwerkzeug 13 in der Stanzpresse 2 wird die Lamelle 10 aus dem Metallband 3 ausgestoßen. In Fig. 2 ist die Stanzkontur 17 des Stanzwerkzeuges 13 durch ein gestricheltes Konturelement gekennzeichnet. Die Lamelle 10 wird mit dem Stanzwerkzeug 13 nach unten in eine Stapelstation 15 gedrückt, in der die Lamellen 10 zu Paketen gestapelt werden. In Fig. 4 ist beispielhaft ein solches Lamellenpaket 14 dargestellt. Die aufeinander liegenden ausgestanzten Lamellen können mechanisch miteinander verbunden werden, beispielsweise durch die Lamellen durchsetzende Stäbe. Auch können die Lamellen mit warzenartigen Erhöhungen versehen sein, mit denen sie formschlüssig in entsprechende Vertiefungen der benachbarten Lamelle eingreifen. Auch ist es möglich, die Lamellen mit Ausnehmungen und abstehenden Zungen zu versehen, die in die Ausnehmungen der jeweils benachbarten Lamelle eingreifen. Hierbei kann die Breite der Zungen kleiner sein als die in Umfangsrichtung gemessene Breite der Öffnungen. Dadurch besteht die Möglichkeit, benachbarte Lamellen innerhalb des Paketes entsprechend gegeneinander zu verdrehen. Bei den beschriebenen Ausbildungen werden die aufeinander liegenden Lamellen in geeigneter Weise fest miteinander verbunden, beispielsweise durch das Paket durchsetzende Stäbe. Auf ihnen wird das Paket in bekannter Weise gehalten.

Die einzelnen Lamellen des Paketes 14 können auch miteinander verschweißt oder auch miteinander verklebt sein.

Die Verbindung der einzelnen Lamellen innerhalb des Paketes 14 kann innerhalb der Stanzpresse 2, aber auch außerhalb von ihr in einer gesonderten Bearbeitungsstation vorgenommen werden.

Die Vorrichtung zeichnet sich dadurch aus, dass mit der Strahlschneideinheit 1 die Geometrie der Lamellen oder zumindest Teile der Lamellengeometrie hergestellt werden. Die Stanzpresse 2 dient dann nur noch zum Abtrennen der Lamellen 10 aus dem Metallband 3 und zum Stapeln der ausgestanzten Lamellen 10 innerhalb der Stapelstation 15 zum Lamellenpaket 14.

Vorteilhaft wird als Metallband 3 ein Schmalband verwendet. Die Strahlschneideinheit 1 kann dadurch klein ausgebildet sein, so dass sich die Vorrichtung durch eine kompakte Ausbildung auszeichnet. Mit dem Strahlschneidkopf 8 lassen sich die gewünschten Konturen der Lamellen mit hoher Genauigkeit aus dem Metallband 3 schneiden. Selbst kompliziertere Formen lassen sich mittels des Strahlschneidkopfes 8 sehr genau herstellen. Die entstehenden Ränder der Lamellen 10 zeichnen sich durch saubere Schnittflächen aus. Im Vergleich zu gestanzten Lamellen sind Stanzeinzüge, Brüche oder Grate an den Schnittflächen nicht zu befürchten.

Da der Strahlschneidkopf 8 programmgesteuert verfahren wird, lassen sich innerhalb kürzester Zeit aus dem Metallband 3, falls es notwendig sein sollte, die unterschiedlichsten Konturen schneiden. Es wird lediglich das entsprechende Programm geladen, damit der Strahlschneidkopf 8 seine gewünschten Bewegungen über dem Metallband 3 ausführt.

Bei der bevorzugten Verwendung eines Schmalbandes für das Metallband 3 werden die Lamellen 10 in einer Spur hintereinander aus dem Metallband 3 geschnitten, wie aus Fig. 2 ersichtlich ist. Selbstverständlich kann für das Metallband 3 auch ein Breitband eingesetzt werden. Dann können die Lamellen 10 auch in zwei oder mehr Spuren nebeneinander aus dem Metallband 3 geschnitten werden. In den verschiedenen Spuren können gleiche oder auch unterschiedliche Lamellen geschnitten werden. Für die unterschiedlich gestalteten Lamellen ist nur der eine Strahlschneidkopf 8 notwendig. Selbstverständlich kann die Strahlschneideinheit 1 auch zwei oder mehr Strahlschneidköpfe 8 aufweisen. Eine solche Gestaltung bietet sich an, wenn beispielsweise zwei oder mehr Metallbänder 3 nebeneinander durch die Strahlschneideinheit 1 und die Stanzpresse 2 gefördert oder die Lamellen 10 in zwei oder mehr Spuren im Metallband 3 erzeugt werden.

Es ist auch möglich, dass beispielsweise zwei Strahlschneidköpfe 8 nebeneinander an einem entsprechend breiten Metallband 3 die Lamellen ausschneiden. Dadurch kann ein sehr hoher Ausstoß der Vorrichtung erreicht werden.

Die beschriebene Vorrichtung und das beschriebene Verfahren dienen zur Herstellung von Lamellenstapeln 14 für Rotoren und/oder Statoren von elektrischen Maschinen bzw. Generatoren. Mit der Vorrichtung und dem Verfahren können auch Lamellenstapel für andere Anwendungen hergestellt werden. In diesem Fall kommen außer Laserschneiden auch andere Strahlschneidverfahren in Betracht.

## Patentansprüche

1. Verfahren zur Herstellung von Lamellen (10) und eines Lamellenpaketes (14) für elektrische Maschinen und Generatoren aus einem Metallband (3), bei dem mit wenigstens einem Stanzwerkzeug (13) die Lamelle (10) aus dem Metallband (3) gestanzt wird, wobei die gesamte Kontur (9) der Lamelle (10) mit Ausnahme von Verbindungsstellen (11) zum Metallband (3) durch Strahlschneiden erzeugt wird,
**dadurch gekennzeichnet, dass** zeitgleich die Verbindungstellen (11) der zuvor erzeugten Lamelle (10) durch das Stanzwerkzeug (13) zum Herauslösen der Lamelle (10) aus dem Metallband (3) durchtrennt werden, dass das Metallband (3) während des Strahlschneidens stillsteht, und dass die Lamellen (10) anschließend zum Lamellenpaket (14) gestapelt werden, indem die Lamelle (10) in einer Stapelstation (15) mit dem Stanzwerkzeug (13) aus dem Metallband (3) ausgestoßen wird.

2. Verfahren nach Anspruch 1,
**dadurch gekennzeichnet, dass** die Lamellen (10) in einer Spur des Metallbandes (3) hergestellt werden.

3. Verfahren nach Anspruch 1,
**dadurch gekennzeichnet, dass** die Lamellen in wenigstens zwei Spuren des Metallbandes (3) hergestellt werden.

4. Verfahren nach einem der Ansprüche 1 bis 3,
**dadurch gekennzeichnet, dass** als Metallband (3) ein Schmalband eingesetzt wird.

5. Verfahren nach einem der Ansprüche 1 bis 3,
**dadurch gekennzeichnet, dass** als Metallband (3) ein Breitband verwendet wird.

6. Verfahren nach einem der Ansprüche 1 bis 5,
**dadurch gekennzeichnet, dass** beim Ausschneiden der Lamelle (10) aus dem Metallband (3) die Verbindungsstelle (11) gelöst wird.

7. Vorrichtung mit wenigstens einer Stanzpresse (2), die wenigstens ein Stanzwerkzeug (13) aufweist, zur Durchführung des Verfahrens nach einem der Ansprüche 1 bis 6, und mit wenigstens einer der Stanzpresse (2) vorgeschalteten Strahlschneideinheit (1) mit wenigstens einem Strahlschneidkopf (8), wobei die Stanzpresse (2) wenigstens eine Stapelstation (15) zum Stapeln der Lamellen (10) aufweist, die dazu eingerichtet ist, dass die Lamellen (10) zu einem Lamellenpaket (14) gestapelt werden, indem die Lamelle (10) in der Stapelstation (15) mit dem Stanzwerkzeug (13) aus dem Metallband (3) ausgestoßen wird, wobei die Vorrichtung dazu eingerichtet ist, dass die gesamte Kontur (9) der Lamelle (10) mit Ausnahme von Verbindungstellen (11) zum Metallband (3) durch Strahlschneiden erzeugt wird,
**dadurch gekennzeichnet, dass** die Vorrichtung dazu eingerichtet ist, dass zeitgleich die Verbindungsstellen (11) der zuvor erzeugten Lamelle (10) durch das Stanzwerkzeug (13) zum Herauslösen der Lamelle (10) aus dem Metallband (3) durchtrennt werden, dass das Metallband (3) während des Strahlschneidens stillsteht, und dass die Lamellen (10) anschließend zum Lamellenpaket (14) gestapelt werden, indem die Lamelle (10) in der Stapelstation (15) mit dem Stanzwerkzeug (13) aus dem Metallband (3) ausgestoßen wird.

8. Vorrichtung nach Anspruch 7,
**dadurch gekennzeichnet, dass** der Strahlschneideinheit (1) ein Richtapparat (6) vorgeschaltet ist.

9. Vorrichtung nach Anspruch 7 oder 8,
**dadurch gekennzeichnet, dass** der Strahlschneideinheit (1) ein Vorschubapparat (7) vorgeschaltet ist.

10. Vorrichtung nach einem der Ansprüche 7 bis 9,
**dadurch gekennzeichnet, dass** der Strahlschneideinheit (1) ein Abwickler (5) vorgeschaltet ist.

11. Vorrichtung nach einem der Ansprüche 7 bis 10,
**dadurch gekennzeichnet, dass** der Stanzpresse (2) eine Paketiereinheit (12) vorgeschaltet ist.

## Claims

1. A method for manufacturing lamellae (10) and a lamella packet (14) for electric machines and generators out of a metal band (3), in which at least one punch tool (13) is used to punch the lamella (10) out of the metal band (3), wherein the entire contour (9) of the lamella (10) except for connecting points (11) to the metal band (3) is generated via beam cutting,
**characterized in that** the connecting points (11) of the lamella (10) generated beforehand are simultaneously cut by the punch tool (13) to detach the lamella (10) from the metal band (3), that the metal band (3) is motionless in the beam cutting process, and that the lamellae (10) are then stacked into a lamella packet (14) by punching the lamella (10) out of the metal band (3) with the punch tool (13) in a stacking station (15).

2. The method according to claim 1,
**characterized in that** the lamellae (10) are manufactured in a track of the metal band (3).

3. The method according to claim 1,
**characterized in that** the lamellae are manufactured in at least two tracks of the metal band (3).

4. The method according to one of claims 1 to 3,
**characterized in that** a narrow band is used as the metal band (3).

5. The method according to one of claims 1 to 3,
**characterized in that** a wide band is used as the metal band (3).

6. The method according to one of claims 1 to 5,
**characterized in that** the connecting point (11) is detached while cutting the lamella (10) out of the metal band (3).

7. A device with at least one punch press (2), which has at least one punch tool (13), for implementing the method according to one of claims 1 to 6, and with at least one beam cutting unit (1) with at least one beam cutting head (8) upstream from the punch press (2), wherein the punch press (2) has at least one stacking station (15) for stacking the lamellae (10), which is set up to stack the lamellae (10) into a lamella packet (14) by punching the lamella (10) out of the metal band (3) with the punch tool (13) in the stacking station (15), wherein the device is set up to generate the entire contour (9) of the lamella (10) except for connecting points (11) to the metal band (3) via beam cutting,
**characterized in that** the device is set up to simultaneously cut the connecting points (11) of the lamella (10) generated beforehand with the punch tool (13) to detach the lamella (10) from the metal band (3), that the metal band (3) is motionless in the beam cutting process, and that the lamellae (10) are then stacked into a lamella packet (14) by punching the lamella (10) out of the metal band (3) with the punch tool (13) in the stacking station (15).

8. The device according to claim 7,
**characterized in that** a straightener (6) is connected upstream from the beam cutting unit (1).

9. The device according to claims 7 or 8,
**characterized in that** a feeder (7) is connected upstream from the beam cutting unit (1).

10. The device according to one of claims 7 to 9,
**characterized in that** an unwinder (5) is connected upstream from the beam cutting unit (1).

11. The device according to one of claims 7 to 10,
**characterized in that** a packeting unit (12) is connected upstream from the punch press (2).

## Revendications

1. Procédé de fabrication de tôles (10) et d'un noyau feuilleté (14) pour des machines et générateurs électriques à partir d'une bande métallique (3), dans lequel au moins un outil d'estampage (13) permet d'estamper la tôle (10) dans la bande métallique (3), dans lequel l'ensemble du contour (9) de la tôle (10) est réalisé par découpage au jet, à l'exception de zones d'assemblage (11) avec la bande métallique (3),
**caractérisé en ce que** les zones d'assemblage (11) des tôles (10) réalisées précédemment sont sectionnées simultanément par l'outil d'estampage (13) pour le détachement de la tôle (10) par rapport à la bande métallique (3), **en ce que** la bande métallique (3) reste immobile pendant le découpage au jet, et **en ce que** les tôles (10) sont ensuite empilées de manière à former le noyau feuilleté (14), en expulsant la tôle (10) de la bande métallique (3) à l'aide de l'outil d'estampage (13) dans une station d'empilage (15).

2. Procédé selon la revendication 1,
**caractérisé en ce que** les tôles (10) sont fabriquées dans une trace de la bande métallique (3).

3. Procédé selon la revendication 1,
**caractérisé en ce que** les tôles sont fabriquées dans au moins deux traces de la bande métallique (3).

4. Procédé selon l'une des revendications 1 à 3,
**caractérisé en ce qu'**une band étroite est utilisée en tant que bande métallique (3).

5. Procédé selon l'une des revendications 1 à 3,
**caractérisé en ce qu'**une bande large est utilisée en tant que bande métallique (3).

6. Procédé selon l'une des revendications 1 à 5,
**caractérisé en ce que** la zone d'assemblage (11) est détachée lors du découpage de la tôle (10) dans la bande métallique (3).

7. Dispositif comprenant au moins une presse d'estampage (2) présentant au moins un outil d'estampage (13), pour la mise en oeuvre du procédé selon l'une des revendications 1 à 6, et au moins une unité de découpage au jet (1) montée en amont de la presse d'estampage (2) avec au moins une tête de découpage au jet (8), dans lequel la presse d'estampage (2) présente au moins une station d'empilage (15) pour l'empilage des tôles (10), laquelle est configurée pour empiler les tôles (10) de manière à former un noyau feuilleté (14), en expulsant la tôle (10) de la bande métallique (3) à l'aide de l'outil d'estampage (13) dans la station d'empilage (15), dans lequel le dispositif est configuré pour réaliser l'ensemble du contour (9) de la tôle (10) par découpage au jet, à l'exception de zones d'assemblage (11) avec la bande métallique (3),
**caractérisé en ce que** le dispositif est configuré pour sectionner simultanément les zones d'assemblage (11) des tôles (10) réalisées précédemment sont sectionnées à l'aide de l'outil d'estampage (13) pour le détachement de la tôle (10) par rapport à la bande métallique (3), **en ce que** la bande métallique (3) reste immobile pendant le découpage au jet, et **en ce que** les tôles (10) sont ensuite empilées de manière à former le noyau feuilleté (14), en expulsant la tôle (10) de la bande métallique (3) à l'aide de l'outil d'estampage (13) dans la station d'empilage (15).

8. Dispositif selon la revendication 7,
**caractérisé en ce qu'**un appareil à dresser 6) est monté en amont de l'unité de découpage au jet (1).

9. Dispositif selon la revendication 7 ou 8,
**caractérisé en ce qu'**un entraîneur (7) est monté en amont de l'unité de découpage au jet (1).

10. Dispositif selon l'une des revendications 7 à 9,
**caractérisé en ce qu'**un dérouleur (5) est monté en amont de l'unité de découpage au jet (1).

11. Dispositif selon l'une des revendications 7 à 10,
**caractérisé en ce qu'**une unité de compactage (12) est montée en amont de la presse d'estampage (2).
